# EUROPÄISCHE PATENTSCHRIFT

(11) **EP 4 215 419 B1**
(45) Veröffentlichungstag und Bekanntmachung des Hinweises auf die Patenterteilung: **16.04.2025**
(21) Anmeldenummer: 22152459.8
(22) Anmeldetag: 20.01.2022
(51) Int. Cl.: B60R 21/215, B60R 21/217

(54) **GASSACKMODULABDECKUNG UND GASSACK-MODUL**
AIRBAG MODULE COVER AND AIRBAG MODULE
COUVERCLE DU MODULE DE SAC À GAZ ET MODULE DE SAC À GAZ

(43) Veröffentlichungstag der Anmeldung: 26.07.2023
(73) Patentinhaber: ZF Automotive Germany GmbH, 73553 Alfdorf (DE); Faurecia Innenraum Systeme GmbH, 76767 Hagenbach (DE); ZF Automotive Systems Poland Sp. z.o.o., 42-202 Czestochowa (PL)
(72) Erfinder: Sadowski, Maciej, 42-4224 Czestochowa (PL)
(74) Vertreter: ZF LIFETEC Intellectual Property

(56) Entgegenhaltungen:
- US-A1- 2006 220 355
- US-A1- 2017 129 443

## Beschreibung

Die Erfindung betrifft eine Gassackmodulabdeckung und ein Gassack-Modul.

Gassack-Module sind in Kraftfahrzeugen vorgesehen, um Fahrzeuginsassen bei einem Fahrzeugunfall zu schützen.

Die Gassack-Module sind vom Fahrgastraum aus betrachtet meist hinter einer Innenverkleidung, beispielsweise hinter einer Instrumententafel oder hinter Verkleidungsteilen wie dem Dachhimmel oder Seitenverkleidungen angeordnet, so dass das dahinter angeordnete Gassack-Modul möglichst unsichtbar bleibt.

Die bekannten Gassack-Module weisen üblicherweise einen Gasgenerator, ein Gehäuse mit einer Entfaltungsöffnung, welche dem Fahrgastraum zugewandt ist, und ein Behältnis mit einem darin befindlichen zusammengefalteten Gassack auf.

Die Frontwand des Moduls hat üblicherweise eine Entfaltungsöffnung oder eine sogenannte Sollbruchlinie, die im Falle eines Fahrzeugunfalls vorbestimmbar durchbrochen wird, sodass eine Entfaltungsöffnung in der Frontwand gebildet wird.

Es existieren Gehäuse für Gassack-Module, welche teilweise aus einem flexiblen, insbesondere textilen Material hergestellt werden. Häufig wird dabei ein flexibles Gehäuseteil, nachfolgend Gehäuseunterteil genannt, mit einem festen Gehäuseteil, nachfolgend Gassackmodulabdeckung genannt, verbunden, wobei an die Verbindung verschiedene Anforderungen gestellt werden. Insbesondere soll die Verbindung der Gehäuseteile einfach, günstig, flexibel und sicher sein.

Die US 2006/0220355 A1 zeigt eine derartige Gassackmodulabdeckung, mit einer Frontwand, die eine vorgegebene Entfaltungsöffnung für einen Gassack und eine rückseitig der Frontwand, in die Frontwand übergehende Seitenwand aufweist, mit zumindest einem Befestigungshaken für ein textiles Gehäuseunterteil, wobei die Befestigungshaken seitlich von der Seitenwand abstehen und dabei einen Sicherungsfortsatz für eine Haltestange bilden, über die das textile Gehäuseunterteil mit der Gassackmodulabdeckung verbunden werden kann.

Es ist daher die Aufgabe der vorliegenden Erfindung, ein Gehäuse eines Gassack-Moduls bereitzustellen, dessen Einzelteile, also die Gassackmodulabdeckung und das Gehäuseunterteil, einfach zusammengefügt werden können, wobei die Verbindung einfach, günstig und sicher sein soll. Außerdem sollen diese Einzelteile des Gehäuses während des gesamten Lebenszyklus des Gassack-Moduls sicher zusammenhalten werden.

Die Aufgabe wird durch eine Gassackmodulabdeckung gelöst, mit einer Frontwand, die eine vorgegebene Entfaltungsöffnung für einen Gassack und eine rückseitig der Frontwand, in die Frontwand übergehende Seitenwand aufweist. Dabei ist zumindest ein Befestigungshaken für ein textiles Gehäuseunterteil vorgesehen, der seitlich von der Seitenwand absteht und zumindest einem von der Seitenwand oder der Frontwand abstehenden Sicherungsfortsatz, der sich in Richtung eines freien Endes des Befestigungshakens erstreckt und sich mit diesem in einer Seitenansicht überschneidet. Der Befestigungshaken und der Sicherungsfortsatz bilden zusammen eine Aufnahmeöffnung für das Gehäuseunterteil, wobei dadurch um die Aufnahmeöffnung in der Seitenansicht eine rahmenförmig geschlossene Form gebildet wird.

Der Grundgedanke der Erfindung ist es, eine Aufnahmeeinrichtung an der Gassackmodulabdeckung zu schaffen, welche es erlaubt, das textile Gehäuseunterteil an der Gassackmodulabdeckung anzubinden. Der Befestigungshaken ermöglicht zusammen mit dem Sicherungsfortsatz eine mechanisch zerstörungsfrei lösbare Anbindung für das Gehäuseunterteil. Beim Fügen der Gassackmodulabdeckung und des Gehäuseunterteils werden somit keine weiteren Komponenten wie beispielsweise ein Klebstoff oder andere Verriegelungsteile benötigt.

Insbesondere ist die rahmenförmig geschlossene Form erfindungsgemäß durch eine in der Seitenansicht in Umfangsrichtung umlaufend geschlossene Form charakterisiert.

Gemäß einer Ausführungsform sind bzw. ist der Befestigungshaken und/oder der Sicherungsfortsatz elastisch federnd ausgebildet. Die durch den Befestigungshaken und den Sicherungsfortsatz rahmenförmig geschlossene Form lässt sich dabei durch eine externe Krafteinwirkung zerstörungsfrei öffnen. Beispielsweise kann mit einer mechanischen Vorrichtung der Befestigungshaken und/oder der Sicherungsfortsatz gespreizt werden, sodass sich die Aufnahmeöffnung in der Seitenansicht betrachtet nach außen öffnen lässt. In die offene Aufnahmeöffnung kann dann einfach und unkompliziert eine Lasche eines Gassackes eingehängt werden. Durch Kräfte, die beim Entfalten des Gassacks entstehen, ist die Verbindung jedoch nicht lösbar.

Vorteilhafterweise hat der Sicherungsfortsatz ein freies Ende, welches sich seitlich des freien Endes des Befestigungshakens erstreckt. Insbesondere kontaktiert das freie Ende des Sicherungsfortsatzes seitlich das freie Ende des Befestigungshakens, um den dadurch endstehenden Ring zu schließen. Durch die seitliche Anordnung können Sicherungsfortsatz und Befestigungshaken optimal zusammenwirken, sodass eine große seitliche Überlappung zur Herstellung der rahmenförmig geschlossenen Form rund um die Aufnahmeöffnung gebildet werden kann.

Eine Ausgestaltung sieht vor, dass der Befestigungshaken oder der Sicherungsfortsatz als ein Laschenpaar mit zwei beabstandeten, nebeneinander, insbesondere parallel zueinander, verlaufenden Laschen ausgebildet und der Sicherungsfortsatz oder der Befestigungshaken durch eine singuläre Lasche gebildet ist, die sich zwischen die Laschen des Laschenpaars erstreckt. Das Laschenpaar erhöht zusätzlich die Sicherheit gegen ein unbeabsichtigtes Aushängen des textilen Gehäuseunterteils.

Gemäß einem Aspekt der Erfindung ist das Laschenpaar durch gabelförmiges Aufzweigen des Befestigungshakens oder Sicherungsfortsatzes vor seinem freien Ende gebildet. Hierdurch können Einzelteile eingespart werden, da durch das gabelförmige Aufzweigen das Laschenpaar einstückig ausgebildet ist.

Alternativ ist das Laschenpaar durch zwei sich von der Frontwand oder Seitenwand beginnend nach außen verlaufende, voneinander beabstandete Laschen gebildet. Dabei geht jede Lasche des Laschenpaars getrennt in die Frontwand bzw. Seitenwand über. Hierdurch hat das Laschenpaar eine besonders einfache Form, was sich vorteilhaft auf die Herstellung auswirkt.

Dabei gilt es zu beachten, dass "nach außen" von der Frontwand bzw. Seitenwand der Gassackmodulabdeckung weg weisend bedeutet.

Vorteilhafterweise ist in der Seitenansicht der Gassackmodulabdeckung und mit Blick auf die Aufnahmeöffnung der Befestigungshaken im Bereich nahe seines freien Endes seitlich nach außen abgewinkelt und erstreckt sich in Richtung zur Frontwand. Außerdem erstreckt sich der abgewinkelte Abschnitt gegenüber dem freien Ende des Sicherungsfortsatzes seitlich weiter nach außen, um eine Einführschräge für das textile Gehäuseunterteil zu bilden. Die Einführschräge bietet den Vorteil, dass der Befestigungshaken und/oder Sicherungsfortsatz nicht zwangsläufig separat gespreizt werden müssen bzw. muss. Die einzuhängende Lasche des textilen Gehäuseunterteils kann einfach in die Einführschräge gelegt werden. Anschließend kann die Lasche durch ein Ziehen am Gehäuseunterteil in die Aufnahmeöffnung gezogen werden.

Gemäß einer weiteren Ausführungsform erstrecken sich entlang eines Außenumfangs der Seitenwand mehrere Befestigungshaken und Sicherungsfortsätze. Durch die Verwendung von mehreren Befestigungshaken und Sicherungsfortsätzen kann eine zwischen Gehäuseunterteil und Gassackmodulabdeckung übertragene Kraft besser verteilt werden. Insbesondere wird während der Befüllung des Gassacks zwischen Gehäuseunterteil und Gassackmodulabdeckung eine große Reaktionskraft übertragen, wobei die mehreren Befestigungshaken und Sicherungsfortsätze ein Einreißen des Gehäuseunterteils verhindern. Eine Anordnung entlang eines Außenumfangs der Seitenwand verhindert zudem eine Faltenbildung am textilen Gehäuseunterteil.

Gemäß einer Variante geht der Befestigungshaken und/oder der Sicherungsfortsatz einstückig in die Seitenwand oder die Frontwand über oder bildet ein separates Teil, das sich aus der Seitenwand oder der Frontwand heraus erstreckt. Bei dem einstückig übergehenden Befestigungshaken und/oder Sicherungsfortsatz wird die Teileanzahl reduziert, wodurch Kosten eingespart werden können. Daneben hat der separat ausgebildete Befestigungshaken und/oder Sicherungsfortsatz den Vorteil, dass die Gassackmodulabdeckung einfach hergestellt werden kann, indem auf Hinterschneidungen verzichtet werden kann. Dadurch ist beispielsweise eine einfache Fertigung mittels eines Spritzgussverfahrens möglich. Außerdem ist es denkbar, dass bei einem separat ausgebildeten Befestigungshaken und/oder Sicherungsfortsatz dieser in einem späteren Arbeitsschritt in die Seitenwand oder Frontwand eingebettet wird.

Die Aufgabe wird ferner erfindungsgemäß gelöst durch ein Gassack-Modul, mit einem Gassack und einem Gehäuse, das den Gassack aufnimmt und umgibt. Das Gehäuse umfasst eine erfindungsgemäße Gassackmodulabdeckung und ein sackartiges Gehäuseunterteil aus einer Textilie, welches eine offene Frontseite hat, die durch die Gassackmodulabdeckung geschlossen wird. Das Gehäuseunterteil hat für jeden Befestigungshaken eine Aufnahmeöffnung, mit der das Gehäuseunterteil in einen zugeordneten Befestigungshaken eingehängt ist.

Das Gassack-Modul weist aufgrund des textilen Gehäuseunterteils ein sehr geringes Gewicht auf. Außerdem wird eine sichere Verbindung zwischen der Gassackmodulabdeckung und dem Gehäuseunterteil ermöglicht. Die Verbindung kann dabei einfach und unkompliziert hergestellt und wieder gelöst werden.

Die Erfindung wird nachstehend anhand zweier Ausführungsbeispiele erläutert, die in den beigefügten Zeichnungen gezeigt sind. Es zeigen:
- Fig. 1 einen Ausschnitt eines erfindungsgemäßen Gassack-Moduls gemäß einer Ausführungsform in einer perspektivischen Ansicht;
- Fig. 2 den Ausschnitt des erfindungsgemäßen Gassack-Moduls aus Fig. 1 in einer Seitenansicht;
- Fig. 3 einen Ausschnitt eines erfindungsgemäßen Gassack-Moduls gemäß einer weiteren Ausführungsform in einer perspektivischen Ansicht; und
- Fig. 4 den Ausschnitt des erfindungsgemäßen Gassack-Moduls aus Fig. 3 in einer Seitenansicht, wobei nur ein Teilausschnitt des Gassack-Moduls dargestellt ist;

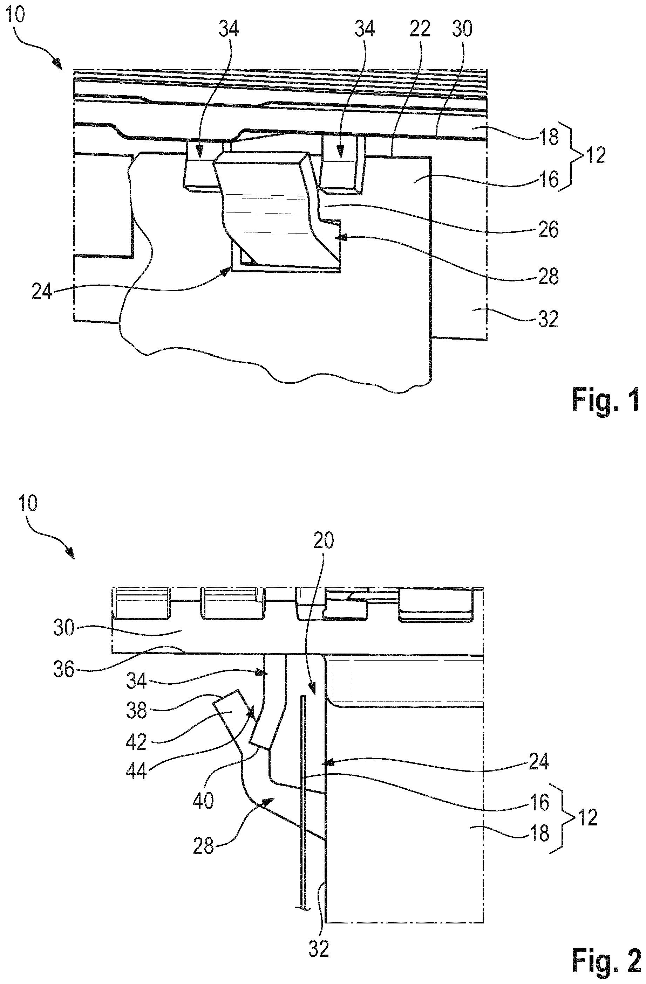

In den Figuren 1 und 2 ist ein erfindungsgemäßes Gassack-Modul 10 gemäß einer ersten Ausführungsform gezeigt, welches als Schutzvorrichtung für Fahrzeuginsassen eines Kraftfahrzeugs dient.

Ein derartiges Gassack-Modul 10 ist beispielsweise hinter einer Instrumententafel im Kraftfahrzeug oder einer anderen Innenverkleidung oder einem Sitzbezug vorgesehen. Das heißt, dass das dahinter angeordnete Gassack-Modul 10 verdeckt wird uns somit unsichtbar bleibt, sofern das Gassack-Modul 10 nicht ausgelöst wird.

Das Gassack-Modul 10 weist einen Gasgenerator, ein Gehäuse 12 mit einer Entfaltungsöffnung, welche zu einer dem Fahrgastraum zugewandten Entfaltungsöffnung führt, und ein Behältnis mit einem darin befindlichen zusammengefalteten Gassack auf.

Bei einem Unfall kann das Gassack-Modul 10 ausgelöst werden, das bedeutet, dass der Gassack mit einem Gas befüllt wird, das vom Gasgenerator bereitgestellt wird. Der Gasgenerator stellt bei Bedarf also ein Gas oder Gasgemisch zur Verfügung.

Das Gehäuse 12 hat die Funktion, den Gassack und den Gasgenerator aufzunehmen und positioniert zu halten.

Hierfür umfasst das Gehäuse 12 ein sackartiges Gehäuseunterteil 16 aus einer Textilie und eine Gassackmodulabdeckung 18, wobei das Gehäuseunterteil 16 an der Gassackmodulabdeckung 18 befestigt ist.

Das Gehäuseunterteil 16 hat eine offene Frontseite 20 (siehe Figur 2), die von der Gassackmodulabdeckung 18 verschlossen wird.

Außerdem hat das Gehäuseunterteil 16 entlang eines zur offenen Frontseite 20 verlaufenden Randes 22 mehrere Aufnahmeöffnungen 24, durch die mehrere Laschen 26 am Gehäuseunterteil 16 gebildet werden. Die Laschen 26 dienen dazu, das Gehäuseunterteil 16 an der Gassackmodulabdeckung 18 zu befestigen und werden dafür in jeweils einen zugeordneten Befestigungshaken 28 der Gassackmodulabdeckung 18 eingehängt.

Die Gassackmodulabdeckung 18 hat eine Frontwand 30, die rückseitig, d.h. an deren Rückseite 36, in eine Seitenwand 32 übergeht.

Die Frontwand 30 ist mit einer Sollbruchlinie versehen, die eine Entfaltungsöffnung definiert. Über diese kann sich der Gassack aus dem Gassack-Modul 10 in den Fahrgastraum ausbreiten.

Entlang eines Außenumfangs der Seitenwand 32 erstrecken sich mehrere der zuvor bereits erwähnten Befestigungshaken 28.

Zusätzlich erstrecken sich mehrere Sicherungsfortsätze 34 von der Rückseite 36 der Frontwand 30 aus, wobei jedem Befestigungshaken 28 ein Sicherungsfortsatz 34 zugeordnet ist. Jeder Befestigungshaken 28 überlappt sich zudem in Seitenansicht mit dem entsprechenden Sicherungsfortsatz 34, wie aus Figur 2 hervorgeht.

Zusammen bildet jeder Befestigungshaken 28 mit dem zugeordneten Sicherungsfortsatz 34 jeweils eine Aufnahmeöffnung 24 an der Gassackmodulabdeckung 18, die für die zuvor erwähnte Befestigung des Gehäuseunterteils 16 an der Gassackmodulabdeckung 18 vorgesehen ist. Die Aufnahmeöffnung 24 ist dabei in Seitenansicht (siehe Figur 2) permanent geöffnet.

In Figur 2 ist zu sehen, dass ein geschlossener Rahmen durch den Befestigungshaken 28, den Sicherungsfortsatz 34, die Seitenwand 32 und die Frontwand 30 gebildet wird, der die Aufnahmeöffnung 24 definiert und umgibt.

Die Befestigungshaken 28 und die Sicherungsfortsätze 34 sind elastisch federnd ausgebildet, sodass die rahmenförmig geschlossene Form von außen auch in Umfangsrichtung durch eine externe Krafteinwirkung zerstörungsfrei geöffnet werden kann. Unter dem Öffnen wird dabei das Auseinanderbewegen des Befestigungshakens 28 und des Sicherungsfortsatzes 34 bezeichnet, sodass die Aufnahmeöffnung 24 in der Seitenansicht betrachtet von außen zugänglich ist. Das Öffnen der rahmenförmig geschlossenen Form dient dazu, das Einhängen der Laschen 26 in die Aufnahmeöffnung 24 zu erleichtern.

Da im vorliegenden Ausführungsbeispiel sämtliche Befestigungshaken 28 und sämtliche Sicherungsfortsätze 34 gleich ausgebildet sind, wird nachfolgend zur Beschreibung der Singular für die Befestigungshaken 28 und die Sicherungsfortsätze 34 verwendet.

Der Befestigungshaken 28 hat ein freies Ende 38, welches sich seitlich eines freien Endes 40 des Sicherungsfortsatzes 34 erstreckt.

Der Sicherungsfortsatz 34 wird durch ein Laschenpaar gebildet, während der Befestigungshaken 28 als singuläre Lasche ausgeführt ist. Die singuläre Lasche des Befestigungshakens 28 erstreckt sich dabei zwischen den singulären Laschen des Laschenpaars (siehe Figur 1).

Das Laschenpaar, also der Sicherungsfortsatz 34, wird durch zwei beabstandete, parallel zueinander verlaufende Laschen gebildet und erstreckt sich, in der Seitenansicht gemäß Figur 2 betrachtet, von der Rückseite 36 aus in Richtung der singulären Lasche des Befestigungshakens 28. Dabei verläuft das Laschenpaar von der Rückseite 36 beginnend mit zunehmender Distanz zur Rückseite 36 von der Seitenwand 32 weg.

Aus Figur 2 ist außerdem ersichtlich, dass der Befestigungshaken 28 nahe seines freien Endes 38 seitlich nach außen, also von der Seitenwand 32 wegweisend, abgewinkelt ist. Infolgedessen erstreckt sich ein abgewinkelter Abschnitt 42 des Befestigungshakens 28 gegenüber dem freien Ende 40 des Sicherungsfortsatzes 34 seitlich weiter nach außen, also von der Seitenwand 32 weiter weg, wodurch eine Einführschräge 44 gebildet wird.

Die Einführschräge 44 dient dazu, die Laschen 26 des Gehäuseunterteils 16 leichter in die Aufnahmeöffnungen 24 einführen zu können (siehe Figur 1 in Kombination mit Figur 2).

In der vorliegenden Ausführungsform ist der Befestigungshaken 28 außerdem als separates Teil ausgebildet und in die Seitenwand 32 eingebettet, wohingegen der Sicherungsfortsatz 34 einstückig in die Frontwand 30 übergeht.

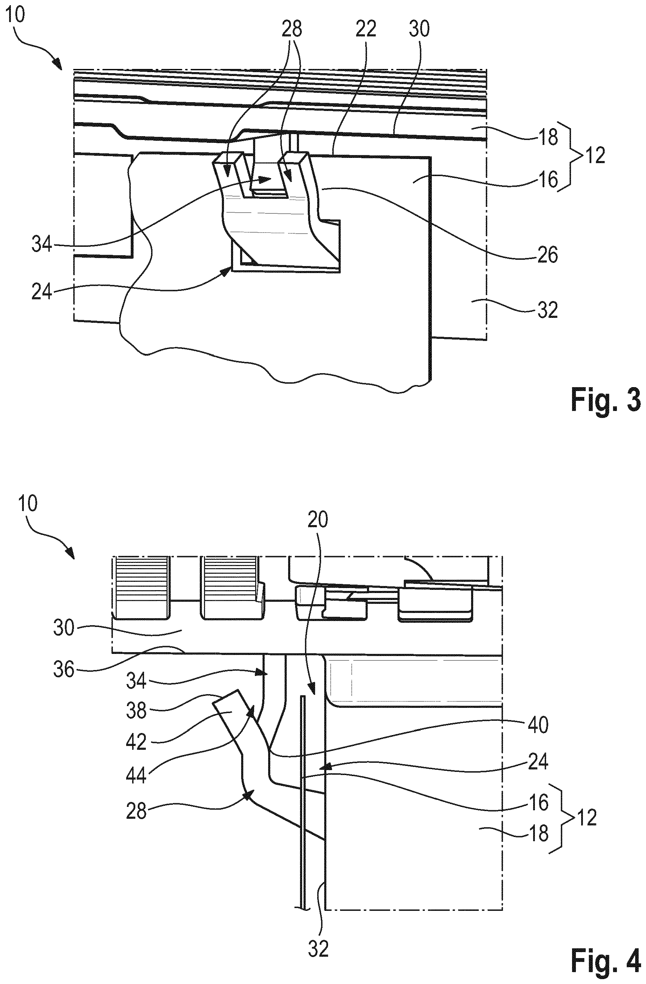

In den Figuren 3 und 4 ist eine weitere Ausführungsform eines erfindungsgemäßen Gassack-Moduls 10 abgebildet.

Die Ausführungsform unterscheidet sich dahingehend von der Ausführungsform gemäß Figur 1 und 2, dass nun jeder der Befestigungshaken 28 als Laschenpaar ausgebildet ist, während die Sicherungsfortsätze 34 jeweils als singuläre Lasche ausgebildet sind.

Wie bereits zuvor, verläuft die singuläre Lasche zwischen dem Laschenpaar, wobei sich die singuläre Lasche und das Laschenpaar in der Seitenansicht (siehe Figur 4) überlappen.

Anders als zuvor, wird das Laschenpaar nun jedoch durch ein gabelförmiges Aufzweigen des Befestigungshakens 28 vor seinem freien Ende 38 gebildet. Somit liegen die in die Seitenwand 32 eingebetteten Sicherungsfortsätze 34 trotz der Ausbildung als Laschenpaar einstückig vor.

Außerdem kontaktiert das freie Ende 38 des Befestigungshakens 28 seitlich das freie Ende 40 des Sicherungsfortsatzes 34, wodurch ein ungewolltes Aushängen des Gehäuseunterteils 16 zusätzlich erschwert wird.

## Patentansprüche

1. Gassackmodulabdeckung, mit einer Frontwand (30), die eine vorgegebene Entfaltungsöffnung für einen Gassack und eine rückseitig der Frontwand (30), in die Frontwand (30) übergehende Seitenwand (32) aufweist, und zumindest einem Befestigungshaken (28) für ein textiles Gehäuseunterteil (16), wobei der Befestigungshaken (28) seitlich von der Seitenwand (32) absteht, und zumindest einem von der Seitenwand (32) oder der Frontwand (30) abstehenden Sicherungsfortsatz (34), der sich in Richtung eines freien Endes (38) des Befestigungshakens (28) erstreckt und sich mit diesem in einer Seitenansicht überschneidet, so dass der Befestigungshaken (28) und der Sicherungsfortsatz (34) zusammen eine Aufnahmeöffnung (24) für das Gehäuseunterteil (16) bilden und um die Aufnahmeöffnung (24) in der Seitenansicht eine rahmenförmig geschlossene Form gebildet wird.

2. Gassackmodulabdeckung nach Anspruch 1, **dadurch gekennzeichnet, dass** der Befestigungshaken (28) und/oder der Sicherungsfortsatz (34) elastisch federnd ausgebildet sind bzw. ist und sich die durch Befestigungshaken (28) und Sicherungsfortsatz (34) rahmenförmig geschlossene Form durch eine externe Krafteinwirkung zerstörungsfrei öffnen lässt.

3. Gassackmodulabdeckung nach Anspruch 1 oder 2, **dadurch gekennzeichnet, dass** der Sicherungsfortsatz (34) ein freies Ende (40) hat, welches sich seitlich des freien Endes (38) des Befestigungshakens (28) erstreckt, insbesondere seitlich das freie Ende (38) des Befestigungshakens (28) kontaktiert.

4. Gassackmodulabdeckung nach einem der vorhergehenden Ansprüche, **dadurch gekennzeichnet, dass** der Befestigungshaken (28) oder der Sicherungsfortsatz (34) als ein Laschenpaar mit zwei beabstandeten, nebeneinander, insbesondere parallel zueinander, verlaufenden Laschen ausgebildet ist und dass der Sicherungsfortsatz (34) oder der Befestigungshaken (28) durch eine singuläre Lasche gebildet ist, die sich zwischen die Laschen des Laschenpaars erstreckt.

5. Gassackmodulabdeckung nach Anspruch 4, **dadurch gekennzeichnet, dass** das Laschenpaar durch gabelförmiges Aufzweigen des Befestigungshakens (28) oder Sicherungsfortsatzes (34) vor seinem freien Ende (38, 40) gebildet ist.

6. Gassackmodulabdeckung nach Anspruch 4, **dadurch gekennzeichnet, dass** das Laschenpaar durch zwei sich von der Frontwand (30) oder Seitenwand (32) beginnend nach außen verlaufende, voneinander beabstandete Laschen gebildet ist.

7. Gassackmodulabdeckung nach einem der vorhergehenden Ansprüche, **dadurch gekennzeichnet, dass** in der Seitenansicht der Gassackmodulabdeckung (18) und mit Blick auf die Aufnahmeöffnung (24) der Befestigungshaken (28) im Bereich nahe seines freien Endes (38) seitlich nach außen abgewinkelt ist und sich in Richtung zur Frontwand (30) erstreckt, wobei sich der abgewinkelte Abschnitt (42) gegenüber dem freien Ende (40) des Sicherungsfortsatzes (34) weiter seitlich nach außen erstreckt, um eine Einführschräge (44) für das textile Gehäuseunterteil (16) zu bilden.

8. Gassackmodulabdeckung nach einem der vorhergehenden Ansprüche, **dadurch gekennzeichnet, dass** sich entlang eines Außenumfang der Seitenwand (32) mehrere Befestigungshaken (28) und Sicherungsfortsätze (34) erstrecken.

9. Gassackmodulabdeckung nach einem der vorhergehenden Ansprüche, **dadurch gekennzeichnet, dass** der Befestigungshaken (28) und/oder der Sicherungsfortsatz (34) einstückig in die Seitenwand (32) oder die Frontwand (30) übergehen oder ein separates Teil bilden, das sich aus der Seitenwand (32) oder der Frontwand (30) heraus erstreckt.

10. Gassack-Modul mit einem Gassack und einem Gehäuse (12), das den Gassack aufnimmt und umgibt, wobei das Gehäuse (12) eine Gassackmodulabdeckung (18) nach einem der vorhergehenden Ansprüche und ein sackartiges Gehäuseunterteil (16) aus einer Textilie umfasst, welches eine offene Frontseite (20) hat, die durch die Gassackmodulabdeckung (18) geschlossen wird, wobei das Gehäuseunterteil (16) für jeden Befestigungshaken (28) eine Aufnahmeöffnung (24) hat, mit der das Gehäuseunterteil (16) in einen zugeordneten Befestigungshaken (28) eingehängt ist.

## Claims

1. An airbag module cover comprising a front wall (30) which has a predefined deployment opening for an airbag and a sidewall (32) merging into the front wall (30) on the rear side of the front wall (30), and at least one fastening hook (28) for a textile lower housing section (16), wherein the fastening hook (28) projects laterally from the sidewall (32), as well as at least one securing extension (34) projecting from the sidewall (32) or the front wall (30) which extends in the direction of a free end (38) of the fastening hook (34) and, in a lateral view, overlaps with the latter so that the fastening hook (28) and the securing extension (34) together form a receiving opening (24) for the lower housing section (16) and a frame-like closed shape is formed around the receiving opening (24) in the side view.

2. The airbag module cover according to claim 1, **characterized in that** the fastening hook (28) and/or the securing extension (34) are/is designed to be resilient and the shape closed frame-like by the fastening hook (28) and the securing extension (34) can be opened non-destructively due to the application of external force.

3. The airbag module cover according to claim 1 or 2, **characterized in that** the securing extension (34) has a free end (40) which extends laterally from the free end (38) of the fastening hook (28), in particular laterally contacts the free end (38) of the fastening hook (28).

4. The airbag module cover according to any one of the preceding claims, **characterized in that** the fastening hook (28) or the securing extension (34) is designed as a pair of lugs having two lugs spaced apart and extending next to, particularly in parallel to each other, and **in that** the securing extension (34) or the fastening hook (28) is formed by a singular lug which extends between the lugs of the pair of lugs.

5. The airbag module cover according to claim 4, **characterized in that** the pair of lugs is formed by forked branching of the fastening hook (28) or the securing extension (34) in front of its end (38, 40).

6. The airbag module cover according to claim 4, **characterized in that** the pair of lugs is formed by two lugs spaced apart from each other and extending outwards starting from the front wall (30) or the sidewall (32).

7. The airbag module cover according to any one of the preceding claims, **characterized in that**, in the side view of the airbag module cover (18) and with a view of the receiving opening (24), the fastening hook (28) is bent laterally outwards in the area close to its free end (38) and extends in the direction of the front wall (30), wherein the bent portion (42) extends further laterally outwards vis-à-vis the free end (40) of the securing extension (34) in order to form an insertion slope (44) for the textile lower housing section (16).

8. The airbag module cover according to any one of the preceding claims, **characterized in that** plural fastening hooks (28) and securing extensions (34) extend along an outer circumference of the sidewall (32).

9. The airbag module cover according to any one of the preceding claims, **characterized in that** the fastening hook (28) and/or the securing extension (34) merge integrally into the sidewall (32) or the front wall (30) or form a separate part which extends out of the sidewall (32) or the front wall (30).

10. An airbag module comprising an airbag and a housing (12) which receives and encloses the airbag, wherein the housing (12) comprises an airbag module cover (18) according to any one of the preceding claims and a baggy lower housing section (16) made of a textile which has an open front (20) that is closed by the airbag module cover (18), wherein the lower housing section (16) for each fastening hook (28) has a receiving opening (24) by which the lower housing section (16) is hooked into an associated fastening hook (28).

## Revendications

1. Couvercle de module de coussin gonflable, avec une paroi frontale (30) qui présente une ouverture de déploiement prédéfinie pour un coussin gonflable et une face arrière de la paroi frontale (30), sur laquelle une paroi latérale (32) se raccorde à la paroi frontale (30), et au moins un crochet de fixation (28) pour une partie inférieure de boîtier (16) en textile, pour lequel le crochet de fixation (28) dépasse latéralement de la paroi latérale (32), et au moins un prolongement de sécurité (34) dépasse de la paroi latérale (32) ou de la paroi frontale (30), lequel s'étend en direction d'une extrémité libre (38) du crochet de fixation (28) et se recoupe avec celui-ci dans une vue latérale, de sorte que le crochet de fixation (28) et le prolongement de sécurité (34) forment ensemble une ouverture de réception (24) pour la partie inférieure de boîtier (16) et qu'une forme fermée en forme de cadre est formée autour de l'ouverture de réception (24) dans la vue latérale.

2. Couvercle de module de coussin gonflable selon la revendication 1, **caractérisé en ce que** le crochet de fixation (28) et/ou le prolongement de sécurité (34) sont ou sont réalisés de manière élastique et **en ce que** la forme fermée en forme de cadre par le crochet de fixation (28) et le prolongement de sécurité (34) peut être ouverte sans destruction par une action de force externe.

3. Couvercle de module de coussin gonflable selon la revendication 1 ou 2, **caractérisé en ce que** le prolongement de sécurité (34) a une extrémité libre (40), laquelle s'étend latéralement à l'extrémité libre (38) du crochet de fixation (28), en particulier qui entre en contact latéralement avec l'extrémité libre (38) du crochet de fixation (28).

4. Couvercle de module de coussin gonflable selon l'une des revendications précédentes, **caractérisé en ce que** le crochet de fixation (28) ou le prolongement de sécurité (34) est réalisé sous la forme d'une paire de pattes avec deux pattes espacées, s'étendant l'une à côté de l'autre, en particulier parallèlement l'une à l'autre, et **en ce que** le prolongement de sécurité (34) ou le crochet de fixation (28) est formé par une patte singulière, qui s'étend entre les pattes de la paire de pattes.

5. Couvercle de module de coussin gonflable selon la revendication 4, **caractérisé en ce que** la paire de pattes est formée par ramification en forme de fourche du crochet de fixation (28) ou du prolongement de sécurité (34) devant son extrémité libre (38, 40).

6. Couvercle de module de coussin gonflable selon la revendication 4, **caractérisé en ce que** la paire de pattes est formée par deux pattes espacées l'une de l'autre et s'étendant vers l'extérieur en commençant par la paroi frontale (30) ou la paroi latérale (32).

7. Couvercle de module de coussin gonflable selon l'une des revendications précédentes, **caractérisé en ce que**, dans la vue latérale du couvercle de module de coussin gonflable (18) et en regardant l'ouverture de réception (24), le crochet de fixation (28) est coudé latéralement vers l'extérieur dans la zone proche de son extrémité libre (38) et s'étend en direction de la paroi frontale (30), pour lequel la section coudée (42) s'étend plus loin latéralement vers l'extérieur par rapport à l'extrémité libre (40) du prolongement de sécurité (34), afin de former un biseau d'introduction (44) pour la partie inférieure du boîtier (16) en textile.

8. Couvercle de module de coussin gonflable selon l'une des revendications précédentes, **caractérisé en ce que** plusieurs crochets de fixation (28) et prolongements de sécurité (34) s'étendent le long d'une périphérie extérieure de la paroi latérale (32).

9. Couvercle de module de coussin gonflable selon l'une des revendications précédentes, **caractérisé en ce que** le crochet de fixation (28) et/ou le prolongement de sécurité (34) se fondent d'un seul tenant dans la paroi latérale (32) ou la paroi frontale (30) ou forment une pièce séparée qui s'étend hors de la paroi latérale (32) ou de la paroi frontale (30).

10. Module de coussin gonflable avec un coussin gonflable et un boîtier (12) qui reçoit et entoure le coussin gonflable, pour lequel le boitier (12) comprend un couvercle de module de coussin gonflable (18) selon l'une des revendications précédentes et une partie inférieure de boîtier (16) en forme de sac en textile, lequel a un côté frontal ouvert (20), qui est fermé par le couvercle de module de coussin gonflable (18), pour lequel la partie inférieure de boîtier (16) a pour chaque crochet de fixation (28) une ouverture de réception (24) par laquelle la partie inférieure de boîtier (16) est accrochée dans un crochet de fixation (28) associé.
